# EUROPÄISCHE PATENTSCHRIFT

(11) **EP 3 600 848 B1**
(45) Veröffentlichungstag und Bekanntmachung des Hinweises auf die Patenterteilung: **29.06.2022**
(21) Anmeldenummer: 18713219.6
(22) Anmeldetag: 23.03.2018
(51) Int. Cl.: B29C 65/02, B29C 65/78, B29C 65/16, B29L 31/34

(54) **VERFAHREN ZUR VERBINDUNG VON DREI BAUTEILEN UND VERBINDBARES SYSTEM ZUR DURCHFÜHRUNG DES VERFAHRENS**
METHOD FOR CONNECTING THREE COMPONENTS AND CONNECTABLE SYSTEM FOR CARRYING OUT THE METHOD
PROCÉDÉ DE RACCORDEMENT DE TROIS COMPOSANTS ET SYSTÈME RACCORDABLE DESTINÉ À LA MISE EN OEUVRE DUDIT PROCÉDÉ

(30) Priorität: 28.03.2017 DE 102017106622
(43) Veröffentlichungstag der Anmeldung: 05.02.2020
(73) Patentinhaber: HELLA GmbH & Co. KGaA, 59552 Lippstadt (DE)
(72) Erfinder: FIEGLER, Georg, 59558 Lippstadt (DE)
(86) Internationale Anmeldenummer: PCT/EP2018/057424
(87) Internationale Veröffentlichungsnummer: WO 2018/177918

(56) Entgegenhaltungen:
- JP-A- H03 150 071
- JP-A- 2014 220 384
- JP-U- H0 727 830

## Beschreibung

Die vorliegende Erfindung bezieht sich auf ein Verfahren zur Verbindung von drei Bauteilen und ein verbindbares System nach dem Oberbegriff des Anspruchs 3 zur Durchführung eines Verfahrens nach einem der Ansprüche 1 oder 2.

Derartige Verfahren zur Verbindung von drei Bauteilen und verbindbare Systeme zur Durchführung eines derartigen Verfahrens sind aus dem Stand der Technik in zahlreichen Ausführungsvarianten bereits bekannt.

Beispielsweise ist aus der DE 10 2005 000 160 B4 ein Verfahren zum formschlüssigen Verbinden von zwei Bauteilen bekannt, bei dem ein erstes und eines zweites formschlüssig zu verbindendes Bauteil zueinander positioniert werden und das erste Bauteil mit einem dritten Bauteil im Durchstrahlschweißverfahren verschweißt wird, wobei durch eine Zustellbewegung des dritten Bauteils während des Schweißprozesses relativ zum ersten Bauteil Material aus plastisch verformbaren Bereichen des ersten Bauteils derart verdrängt wird, dass das verdrängte Material eine formschlüssige Verbindung zwischen dem ersten und dem zweiten Bauteil erzeugt.

Ferner ist aus der JP H03 150071 A ein Verfahren und ein verbindbares System bekannt, bei denen eine Leiterplatte bei dem stoffschlüssigen Fügen eines oberen und eines unteren Gehäuseteils mittels eines formschlüssigen Verbindens von dem oberen oder unteren Gehäuseteil mit der Leiterplatte mittels Formschlusselementen während der Bewegung der oberen und unteren Gehäuseteile relativ zueinander entlang einer gemeinsamen Fügeachse fixiert wird, wobei die Leiterplatte nach dem stoffschlüssigen und formschlüssigen Verbinden mittels des oberen und des unteren Gehäuseteils parallel und quer zu der Fügeachse festgelegt ist.

Ähnliche technische Lösungen sind auch aus der JP H07 27830 U und der JP 2014 220384 A bekannt.

Hier setzt die vorliegende Erfindung an.

Der vorliegenden Erfindung liegt die Aufgabe zugrunde, eine Verbindung von drei Bauteilen mit einfacheren Mitteln zu ermöglichen.

Diese Aufgabe wird durch ein Verfahren mit den Merkmalen des Anspruchs 1 und ein verbindbares System mit den Merkmalen des Anspruchs 3 gelöst. Die Unteransprüche betreffen vorteilhafte Weiterbildungen der Erfindung.

Ein wesentlicher Vorteil der Erfindung liegt insbesondere darin, dass die Verbindung von drei Bauteilen fertigungstechnisch vereinfacht ist. Beispielsweise entfällt bei der Erfindung ein Durchstrahlschweißen des zweiten Bauteils zur Herstellung einer formschlüssigen Verbindung mit dem dritten Bauteil. Somit ist eine zusätzliche Durchstrahlschweißvorrichtung nicht erforderlich. Auch sind die durch die Erfindung verbindbaren drei Bauteile nach Art, Material, Dimensionierung und relativer Anordnung zueinander in weiteren Grenzen frei wählbar. Beispielsweise ist die Erfindung dann besonders vorteilhaft, wenn es nicht möglich ist, das zweite Bauteil durch das dritte Bauteil hindurchzuführen. Crashrippen-Verbindungen sind auf konstruktiv einfache Weise herstellbar und weisen eine innige Verbindung zwischen den zu verbindenden Bauteilen auf. Darüber hinaus ermöglicht eine Crashrippen-Verbindung größere Bauteiltoleranzen.

Grundsätzlich ist das stoffschlüssige Verbinden von dem Fachmann aus einer Vielzahl von für den jeweiligen Einzelfall geeigneten stoffschlüssigen Verbindungstechniken frei wählbar. Vorteilhafterweise ist das stoffschlüssige Verbinden als Schweißen, insbesondere als Laserschweißen, ausgebildet. Durch das Schweißen sind für eine lange Standzeit haltbare und dichte Verbindungen ermöglicht. Darüber hinaus sind Schweißverfahren gut automatisierbar. Insbesondere vorteilhaft ist das Laserschweißen, da es kontaktlos ist und auch für komplizierte Geometrien der zu verbindenden Bauteile geeignet ist. Ferner gewährleistet das Laserschweißen gegenüber anderen Schweißverfahren einen lediglich geringen thermischen Verzug.

Eine vorteilhafte Weiterbildung des erfindungsgemäßen verbindbaren Systems sieht vor, dass das erste Bauteil und/oder das zweite Bauteil mindestens einen ersten Vorsprung aufweisen/aufweist, wobei das freie Ende des ersten Vorsprungs als eine der Verbindungsflächen ausgebildet ist. Mittels des ersten Vorsprungs ist die daran ausgebildete Verbindungsfläche auf die Bedürfnisse der stoffschlüssigen Verbindung leicht anpassbar und zwar unabhängig von dem Rest des ersten und/oder zweiten Bauteils. Dies ist besonders vorteilhaft, wenn die Verbindungsflächen für die stoffschlüssige Verbindung beispielsweise einer höherwertigen Oberflächenbehandlung bedürfen.

Eine andere vorteilhafte Weiterbildung des erfindungsgemäßen verbindbaren Systems sieht vor, dass das erste Bauteil oder das zweite Bauteil mindestens einen zweiten Vorsprung aufweist, wobei das freie Ende des zweiten Vorsprungs des ersten oder zweiten Bauteils als ein Formschlusselement ausgebildet ist. Auf diese Weise ist die formschlüssige Verbindung auf konstruktiv einfache Weise realisierbar.

Eine zu der vorgenannten Ausführungsform alternative vorteilhafte Weiterbildung sieht vor, dass das erste Bauteil mindestens einen zweiten Vorsprung aufweist, wobei das freie Ende des zweiten Vorsprungs des ersten Bauteils als ein Formschlusselement ausgebildet ist und ein dritter Vorsprung des zweiten Bauteils bei dem formschlüssigen Verbinden von dem ersten mit dem dritten Bauteil in dem dem zweiten Vorsprung abgewandten Bereich des dritten Bauteils angeordnet ist und als Auflager für das dritte Bauteil wirkt, oder dass das zweite Bauteil mindestens einen zweiten Vorsprung aufweist, wobei das freie Ende des zweiten Vorsprungs des zweiten Bauteils als ein Formschlusselement ausgebildet ist und ein dritter Vorsprung des ersten Bauteils bei dem formschlüssigen Verbinden von dem zweiten mit dem dritten Bauteil in dem dem zweiten Vorsprung abgewandten Bereich des dritten Bauteils angeordnet ist und als Auflager für das dritte Bauteil wirkt. Hierdurch ist eine definierte Anlage der miteinander formschlüssig zu verbindenden Bauteile und damit eine gute Kraftübertragung bei der Herstellung der formschlüssigen Verbindung erreicht.

Eine weitere vorteilhafte Weiterbildung des erfindungsgemäßen verbindbaren Systems sieht vor, dass das erste Bauteil und/oder das zweite Bauteil mindestens einen vierten Vorsprung aufweisen/aufweist, wobei das freie Ende des vierten Vorsprungs als ein Anschlag ausgebildet ist und bei dem Verbinden des verbindbaren Systems den Fügeweg entlang der Fügeachse begrenzt. Auf diese Weise ist eine Begrenzung des gemeinsamen Fügeweges zur Herstellung der stoffschlüssigen und der formschlüssigen Verbindung mit konstruktiv einfachen Mitteln realisiert.

Anhand der beigefügten, grob schematischen Zeichnung wird die Erfindung nachfolgend näher erläutert. Dabei zeigt:
- Fig. 1: ein erstes Ausführungsbeispiel eines erfindungsgemäßen verbindbaren Systems in einer seitlichen Schnittdarstellung,
- Fig. 2: ein Detail des ersten Ausführungsbeispiels in dem Bereich des Crashrippenelements in einer Unteransicht,
- Fig. 3: das erste Ausführungsbeispiel in einer weiteren seitlichen Schnittdarstellung,
- Fig. 4: ein zweites Ausführungsbeispiel eines erfindungsgemäßen verbindbaren Systems in einer seitlichen Schnittdarstellung,
- Fig. 5: das zweite Ausführungsbeispiel in einer weiteren seitlichen Schnittdarstellung und
- Fig. 6: eine zu dem zweiten Ausführungsbeispiel korrespondierende Übersichtsdarstellung der Crashrippenelemente.

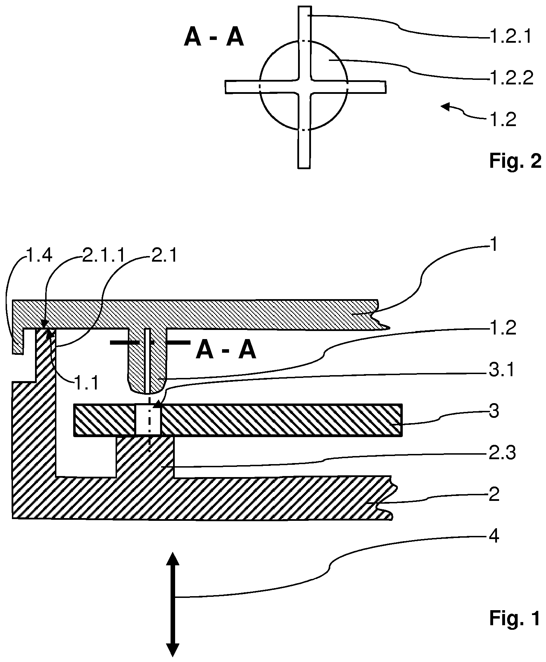

In Fig. 1 ist ein erstes Ausführungsbeispiel eines erfindungsgemäßen verbindbaren Systems dargestellt. Das verbindbare System umfasst drei miteinander zu verbindende Bauteile, nämlich ein erstes Bauteil 1, ein zweites Bauteil 2 und ein drittes Bauteil 3. Das erste und das zweite Bauteil 1 und 2 sind jeweils als eine Gehäusehälfte aus Kunststoff ausgebildet. Das dritte Bauteil 3 ist als eine elektrische Leiterplatte ausgebildet, die in dem durch das erste und das zweite Bauteil 1 und 2 gebildete Gehäuse aufgenommen ist. In Fig. 1 sind die drei Bauteile 1, 2 und 3 noch nicht miteinander verbunden. Zur stoffschlüssigen Verbindung des ersten und des zweiten Bauteils 1, 2 weist das zweite Bauteil 2 einen ersten Vorsprung 2.1 auf, dessen freies Ende 2.1.1 als eine Verbindungsfläche ausgebildet ist. Korrespondierend zu der Verbindungsfläche 2.1.1 des zweiten Bauteils 2 weist das erste Bauteil 1 eine Verbindungsfläche 1.1 auf. Beide Verbindungsflächen 1.1 und 2.1.1 werden auf nachfolgend noch erläuterte Weise in einem als Laserschweißverfahren ausgebildeten Schweißverfahren miteinander stoffschlüssig verbunden. Zur formschlüssigen Verbindung des ersten Bauteils 1 mit dem dritten Bauteil 3 weist das erste Bauteil 1 einen zweiten Vorsprung 1.2 auf, der mit einer Aufnahme 3.1 des dritten Bauteils 3 auf die nachfolgend noch erläuterte Weise formschlussbildend zusammenwirkt. Hierfür ist der zweite Vorsprung 1.2 als ein Crashrippenelement ausgebildet, das anhand von Fig. 2 näher erläutert wird. Die Aufnahme 3.1 ist in dem vorliegenden Ausführungsbeispiel als ein Durchgangsloch in der Leiterplatte 3 ausgebildet.

Das Crashrippenelement 1.2 ist in Fig. 2 in einer, bezogen auf die Bildebene von Fig. 1, Unteransicht dargestellt und weist vier in der Unteransicht kreuzförmig angeordnete Crashrippen 1.2.1 auf, die sich in der Unteransicht senkrecht von einem Kern 1.2.2 des Crashrippenelements 1.2 weg erstrecken. Um eine Ausrichtung des Crashrippenelements 1.2 zu dem Durchgangsloch 3.1 zu erleichtern und die für das Abscheren der Crashrippen 1.2.1 erforderliche Kraft zu reduzieren, sind die Crashrippen 1.2.1 an deren freien Enden wie aus Fig. 1 ersichtlich abgerundet. Diese Abrundungen dienen somit als Einführschrägen und ermöglichen damit auch größere Bauteiltoleranzen. Zur Festlegung der Leiterplatte 3 kann eine Mehrzahl von derartigen Crashrippenelementen und dazu korrespondierend ausgebildete und angeordnete Aufnahmen vorgesehen sein.

Damit das dritte Bauteil 3 nach der Verbindung des verbindbaren Systems, also nach dem Herstellen der stoffschlüssigen Verbindung des ersten und des zweiten Bauteils 1, 2 und nach dem Herstellen der formschlüssigen Verbindung des ersten und des dritten Bauteils 1, 3 mittels des ersten und des zweiten Bauteils 1, 2 parallel und quer zu einer gemeinsamen Fügeachse für das stoffschlüssige und das formschlüssige Verbinden festgelegt ist, weist das zweite Bauteil 2 in dem vorliegenden Ausführungsbeispiel einen dritten Vorsprung 2.3 auf, der bei dem formschlüssigen Verbinden von dem ersten mit dem dritten Bauteil 1, 3 in dem dem zweiten Vorsprung 1.2 abgewandten Bereich des dritten Bauteils 3 angeordnet ist und als Auflager für das dritte Bauteil 3 wirkt. Die Fügeachse ist in Fig. 1 mit einem Doppelpfeil 4 symbolisiert.

Darüber hinaus weist das erste Bauteil 1 einen vierten Vorsprung 1.4 auf, wobei das freie Ende des vierten Vorsprungs 1.4 als ein Anschlag ausgebildet ist und bei dem Verbinden des verbindbaren Systems den gemeinsamen Fügeweg entlang der Fügeachse 4 zur Herstellung der stoffschlüssigen und der formschlüssigen Verbindung begrenzt.

Im Nachfolgenden wird das erfindungsgemäße Verfahren zur Verbindung von drei Bauteilen exemplarisch anhand des verbindbaren Systems gemäß dem ersten Ausführungsbeispiel sowie anhand der Fig. 1 bis 3 näher erläutert.

Zuerst werden die drei Bauteile 1, 2 und 3 derart relativ zueinander positioniert, dass sich die zueinander korrespondierenden Verbindungsflächen 1.1 und 2.1.1 von dem ersten und dem zweiten Bauteil 1, 2 sowie die zueinander korrespondierend ausgebildeten Formschlusselemente, nämlich das Crashrippenelement 1.2 und das Durchgangsloch 3.1 von dem ersten Bauteil 1 und dem dritten Bauteil 3 einander gegenüberliegen. Siehe hierzu Fig. 1, in der die Endlage nach der Positionierung der miteinander zu verbindenden Bauteile 1, 2 und 3 für die nachfolgende Verbindung der Bauteile 1, 2 und 3 dargestellt ist.

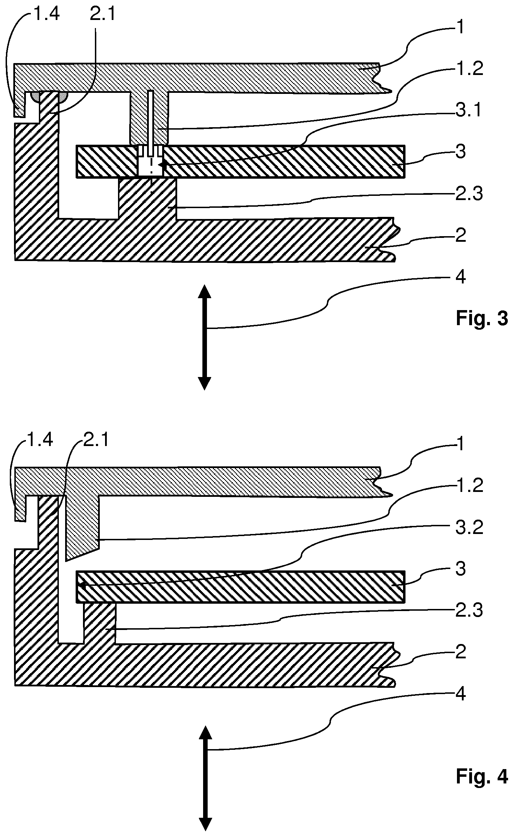

In einem nächsten Schritt werden die Bauteile 1, 2 und 3 relativ zueinander entlang der gemeinsamen Fügeachse 4 derart bewegt, dass die Verbindungsflächen 1.1 und 2.1.1 und die Formschlusselemente, nämlich das Crashrippenelement 1.2 und das Durchgangsloch 3.1, mittels einer Fügekraft jeweils aufeinander zu bewegt werden. Hierzu ist das zweite Bauteil 2 mittels einer nicht dargestellten Halterung fixiert und das erste Bauteil 1 wird mittels einer ebenfalls nicht dargestellten Zustellvorrichtung in Richtung auf das zweite Bauteil 2 und das auf dem dritten Vorsprung 2.3 des zweiten Bauteils 2 abgelegten dritte Bauteil 3 zubewegt. Siehe hierzu Fig. 1 in Verbindung mit Fig. 3.

Wie aus Fig. 1 ersichtlich ist, liegen die Verbindungsflächen 1.1 und 2.1.1 für die stoffschlüssige Verbindung der Bauteile 1 und 2 bereits aneinander an, so dass der Laserschweißvorgang mittels einer nicht dargestellten Laserschweißvorrichtung auf dem Fachmann bekannte Weise beginnt. Dabei werden die beiden Bauteile 1 und 2 in dem Bereich der Verbindungsflächen 1.1 und 2.1.1 aufgeschmolzen, so dass sich das erste Bauteil 1 weiter in Richtung auf das zweite und das dritte Bauteil 2, 3 zubewegen kann.

Sobald das Crashrippenelement 1.2 und das Durchgangsloch 3.1 für die formschlüssige Verbindung der Bauteile 1 und 3 miteinander in Kontakt gelangen, beginnt parallel zu dem stoffschlüssigen Verbinden der Bauteile 1 und 2 das formschlüssige Verbinden der Bauteile 1 und 3. Dabei gelangt das Crashrippenelement 1.2 derart in Eingriff mit den Begrenzungswänden des Durchgangslochs 3.1, dass die Crashrippen 1.2.1 des Crashrippenelements 1.2 aufgrund der höheren Festigkeit der Leiterplatte 3 abgeschert werden. Hierfür liegt das dritte Bauteil 3 auf dem als Auflager ausgebildeten dritten Vorsprung 2.3 auf.

Siehe hierzu auch Fig. 3, die eine Zwischenlage des verbindbaren Systems während des stoffschlüssigen und des formschlüssigen Verbindens der drei Bauteile 1, 2 und 3 zeigt. Während der Fügevorgänge, also dem stoffschlüssigen und formschlüssigen Verbinden, wird das erste Bauteil 1 aufgrund der Fügekraft weiter entlang der Fügeachse 4 in Richtung auf das zweite und das dritte Bauteil 2, 3 zubewegt. Der dabei zurückgelegte Fügeweg ist erst dann zu Ende, wenn das erste Bauteil 1 mit dessen vierten Vorsprung 1.4 an dem zweiten Bauteil 2 anliegt. Aufgrund des daraus resultierenden Anstiegs der Fügekraft wird der Laserschweißvorgang beendet. Das erste Bauteil 1 ist dann mittels der Schweißverbindung an den Verbindungsflächen 1.1 und 2.1.1 mit dem zweiten Bauteil 2 verschweißt und mittels des Crashrippenelements 1.2 und dem Durchgangsloch 3.1 mit dem dritten Bauteil 3 formschlüssig verbunden. Im Ergebnis des stoffschlüssigen und formschlüssigen Verbindens der drei Bauteile 1, 2 und 3 ist das dritte Bauteil 3 mittels des ersten und des zweiten Bauteils 1, 2 parallel und quer zu der gemeinsamen Fügeachse 4 festgelegt.

In den Fig. 4 bis 6 ist ein zweites Ausführungsbeispiel eines erfindungsgemäßen verbindbaren Systems dargestellt, das nachfolgend lediglich im Umfang der Unterschiede zu dem ersten Ausführungsbeispiel erläutert wird. Gleiche oder gleichwirkende Bauteile sind mit den gleichen Bezugszeichen versehen.

In Fig. 4 ist das zweite Ausführungsbeispiel eines erfindungsgemäßen verbindbaren Systems in einer seitlichen Schnittansicht analog zur Fig. 1 für das erste Ausführungsbeispiel dargestellt. Im Unterschied zu dem ersten Ausführungsbeispiel weist die Leiterplatte 3 kein Durchgangsloch auf, in das ein Crashrippenelement eingreifen würde. Stattdessen ist der als Crashrippenelement ausgebildete zweite Vorsprung 1.2 des ersten Bauteils 1 einem Randbereich 3.2 der Leiterplatte 3 gegenüberliegend an dem ersten Bauteil 1 angeordnet. Das Crashrippenelement 1.2 des zweiten Ausführungsbeispiels weist lediglich eine Crashrippe 1.2.1 auf, die, analog zu dem ersten Ausführungsbeispiel, an deren freiem Ende eine aus Fig. 4 ersichtliche Einführschräge aufweist. Mit dem Crashrippenelement 1.2 greift das erste Bauteil 1 in einen zwischen dem zweiten Bauteil 2 und dem Randbereich 3.2 des dritten Bauteils 3 angeordneten Spalt ein. Das Weitere verhält sich analog zu dem ersten Ausführungsbeispiel.

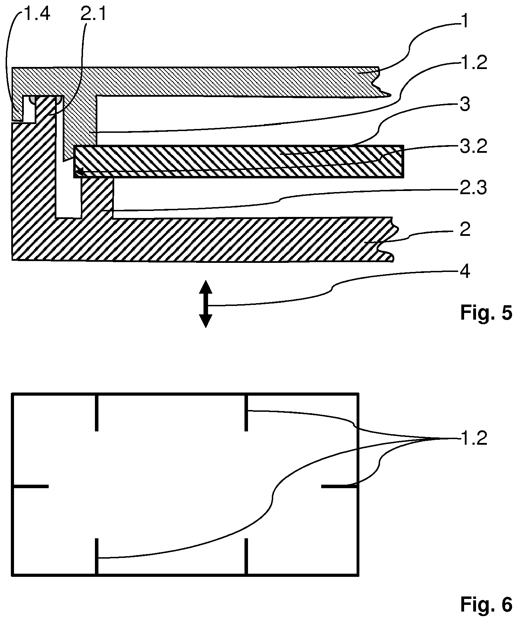

Fig. 5 zeigt das zweite Ausführungsbeispiel in einer zur Fig. 3 des ersten Ausführungsbeispiels vergleichbaren Darstellung, nämlich in einer Zwischenlage des verbindbaren Systems während des stoffschlüssigen und des formschlüssigen Verbindens der drei Bauteil 1, 2 und 3. Während der Fügevorgänge, also dem stoffschlüssigen und formschlüssigen Verbinden, wird das erste Bauteil 1 aufgrund der Fügekraft weiter entlang der Fügeachse 4 in Richtung auf das zweite und das dritte Bauteil 2, 3 zubewegt. Der dabei zurückgelegte Fügeweg ist erst dann zu Ende, wenn das erste Bauteil 1 mit dessen vierten Vorsprung 1.4 an dem zweiten Bauteil 2 anliegt. Aufgrund des daraus resultierenden Anstiegs der Fügekraft wird der Laserschweißvorgang beendet. Das erste Bauteil 1 ist dann mittels der Schweißverbindung an den Verbindungsflächen 1.1 und 2.1.1 mit dem zweiten Bauteil 2 verschweißt und mittels des Crashrippenelements 1.2 und dem Randbereich 3.2 mit dem dritten Bauteil 3 formschlüssig verbunden. Im Ergebnis des stoffschlüssigen und formschlüssigen Verbindens der drei Bauteile 1, 2 und 3 gemäß dem zweiten Ausführungsbeispiel ist das dritte Bauteil 3 mittels des ersten und des zweiten Bauteils 1, 2 parallel und quer zu der gemeinsamen Fügeachse 4 festgelegt.

In Fig. 6 ist eine rein schematische Übersichtsdarstellung der Crashrippenelemente 1.2 in einer, bezogen auf die Bildebene von Fig. 5, Unteransicht gezeigt, wobei die nicht dargestellte Leiterplatte 3 im durch die Crashrippenelemente 1.2 gebildeten Zentrum von Fig. 6 angeordnet ist. Daraus ist ersichtlich, dass die Crashrippenelemente 1.2 und damit die einzelnen Crashrippen 1.2.1 des zweiten Ausführungsbeispiels entlang des gesamten Randbereichs 3.2 der Leiterplatte 3 verteilt angeordnet sind. Dabei ist der Aufbau der einzelnen Crashrippenelemente 1.2 und damit der einzelnen Crashrippen 1.2.1 identisch; gleiches gilt für das formschlüssige Verbinden, das analog zu dem des ersten Ausführungsbeispiels erfolgt.

Die Erfindung ist nicht auf die vorliegenden Ausführungsbeispiele begrenzt. Beispielsweise sind auch andere stoffschlüssige und formschlüssige Verbindungen denkbar. Auch die einzelnen Vorsprünge, Verbindungsflächen und Formschlusselemente sind je nach den Erfordernissen des Einzelfalls nach Art, Material, Dimensionierung und Anordnung in weiten geeigneten Grenzen frei wählbar. Beispielsweise ist es auch möglich, dass das zweite Bauteil mindestens einen zweiten Vorsprung aufweist, wobei das freie Ende des zweiten Vorsprungs des zweiten Bauteils als ein Formschlusselement ausgebildet ist und ein dritter Vorsprung des ersten Bauteils bei dem formschlüssigen Verbinden von dem zweiten mit dem dritten Bauteil in dem dem zweiten Vorsprung abgewandten Bereich des dritten Bauteils angeordnet ist und als Auflager für das dritte Bauteil wirkt.

### Bezugszeichenliste

- 1: Erstes Bauteil, als eine Kunststoffgehäusehälfte ausgebildet
- 1.1: Verbindungsfläche des ersten Bauteils 1
- 1.2: Zweiter Vorsprung des ersten Bauteils, als Crashrippenelement ausgebildet
- 1.2.1: Crashrippen des Crashrippenelements 1.2
- 1.2.2: Kern des Crashrippenelements 1.2
- 1.4: Vierter Vorsprung des ersten Bauteils 1, als Anschlag ausgebildet
- 2: Zweites Bauteil, als eine Kunststoffgehäusehälfte ausgebildet
- 2.1: Erster Vorsprung des zweiten Bauteils 2
- 2.1.1: Verbindungsfläche des ersten Vorsprungs 2.1
- 2.3: Dritter Vorsprung des zweiten Bauteils 2, als Auflager ausgebildet
- 3: Drittes Bauteil, als eine elektrische Leiterplatte ausgebildet
- 3.1: Aufnahme der Leiterplatte 3, als Durchgangsloch ausgebildet (1. Ausführungsbeispiel)
- 3.2: Aufnahme der Leiterplatte 3, als Randbereich ausgebildet (2. Ausführungsbeispiel)
- 4: Fügeachse

## Patentansprüche

1. Verfahren zur Verbindung von drei Bauteilen (1, 2, 3), das die folgenden Merkmale aufweist:
- Positionieren der Bauteile (1, 2, 3) derart, dass sich zueinander korrespondierende Verbindungsflächen (1.1, 2.1.1) von dem ersten und dem zweiten Bauteil (1, 2) sowie zueinander korrespondierend ausgebildete Formschlusselemente (1.2, 3.1; 1.2, 3.2) von dem ersten oder zweiten Bauteil (1) und dem dritten Bauteil (3) einander gegenüberliegen;
- Bewegen der Bauteile (1, 2, 3) relativ zueinander entlang einer gemeinsamen Fügeachse (4), derart, dass die Verbindungsflächen (1.1, 2.1.1) und die Formschlusselemente (1.2, 3.1; 1.2, 3.2) jeweils aufeinander zu bewegt werden;
- Stoffschlüssiges Verbinden von dem ersten mit dem zweiten Bauteil (1, 2) mittels der Verbindungsflächen (1.1, 2.1.1) sowie formschlüssiges Verbinden von dem ersten oder zweiten Bauteil (1) mit dem dritten Bauteil (3) mittels der Formschlusselemente (1.2, 3.1; 1.2, 3.2) während der Bewegung der Bauteile (1, 2, 3) relativ zueinander entlang der gemeinsamen Fügeachse (4), wobei das dritte Bauteil (3) nach dem stoffschlüssigen und formschlüssigen Verbinden mittels des ersten und des zweiten Bauteils (1, 2) parallel und quer zu der Fügeachse (4) festgelegt ist;
- wobei die zueinander korrespondierenden Formschlusselemente (1.2, 3.1; 1.2, 3.2) als mindestens ein Crashrippenelement (1.2) und eine zu dem Crashrippenelement (1.2) korrespondierende Aufnahme (3.1; 3.2) ausgebildet sind und das formschlüssige Verbinden durch eine Abscherung des Crashrippenelements (1.2) bewirkt wird.

2. Verfahren nach Anspruch 1,
**dadurch gekennzeichnet,**
**dass** das stoffschlüssige Verbinden als Schweißen, insbesondere Laserschweißen, ausgebildet ist.

3. Verbindbares System zur Durchführung des Verfahrens nach einem der Ansprüche 1 oder 2, umfassend drei miteinander zu verbindende Bauteile (1, 2 3), wobei ein erstes und ein zweites Bauteil (1, 2) jeweils zueinander korrespondierende Verbindungsflächen (1.1, 2.1.1) zur stoffschlüssigen Verbindung sowie das erste oder zweite Bauteil (1) und ein drittes Bauteil (3) zueinander korrespondierende Formschlusselemente (1.2, 3.1; 1.2, 3.2) zur formschlüssigen Verbindung aufweisen, wobei die Verbindungsflächen (1.1, 2.1.1) derart ausgebildet und zueinander ausgerichtet sind, dass das erste und das zweite Bauteil (1, 2) während deren stoffschlüssiger Verbindung entlang einer gemeinsamen Fügeachse (4) relativ aufeinander zu bewegbar sind, und wobei die Formschlusselemente (1.2, 3.1; 1.2, 3.2) derart ausgebildet und zueinander ausgerichtet sind, dass das erste oder zweite Bauteil (1) und das dritte Bauteil (3) während deren formschlüssiger Verbindung entlang der gemeinsamen Fügeachse (4) relativ aufeinander zu bewegbar sind und das dritte Bauteil (3) nach dem stoffschlüssigen und dem formschlüssigen Verbinden mittels des ersten und des zweiten Bauteils (1, 2) parallel und quer zu der Fügeachse (4) festgelegt ist,
**dadurch gekennzeichnet,**
**dass** die zueinander korrespondierenden Formschlusselemente (1.2, 3.1; 1.2, 3.2) als mindestens ein Crashrippenelement (1.2) und eine zu dem Crashrippenelement (1.2) korrespondierende Aufnahme (3.1; 3.2) ausgebildet sind.

4. Verbindbares System nach Anspruch 3,
**dadurch gekennzeichnet,**
**dass** das erste Bauteil und/oder das zweite Bauteil (2) mindestens einen ersten Vorsprung (2.1) aufweisen/aufweist, wobei das freie Ende des ersten Vorsprungs (2.1) als eine der Verbindungsflächen (2.1.1) ausgebildet ist.

5. Verbindbares System nach Anspruch 3 oder 4,
**dadurch gekennzeichnet,**
**dass** das erste Bauteil (1) oder das zweite Bauteil mindestens einen zweiten Vorsprung (1.2) aufweist, wobei das freie Ende des zweiten Vorsprungs (1.2) des ersten oder zweiten Bauteils (1) als ein Formschlusselement (1.2) ausgebildet ist.

6. Verbindbares System nach Anspruch 3 oder 4,
**dadurch gekennzeichnet,**
**dass** das erste Bauteil (1) mindestens einen zweiten Vorsprung (1.2) aufweist, wobei das freie Ende des zweiten Vorsprungs (1.2) des ersten Bauteils (1) als ein Formschlusselement (1.2) ausgebildet ist und ein dritter Vorsprung (2.3) des zweiten Bauteils (2) bei dem formschlüssigen Verbinden von dem ersten mit dem dritten Bauteil (1, 3) in dem dem zweiten Vorsprung (1.2) abgewandten Bereich des dritten Bauteils (3) angeordnet ist und als Auflager (2.3) für das dritte Bauteil (3) wirkt, oder dass das zweite Bauteil mindestens einen zweiten Vorsprung aufweist, wobei das freie Ende des zweiten Vorsprungs des zweiten Bauteils als ein Formschlusselement ausgebildet ist und ein dritter Vorsprung des ersten Bauteils bei dem formschlüssigen Verbinden von dem zweiten mit dem dritten Bauteil in dem dem zweiten Vorsprung abgewandten Bereich des dritten Bauteils angeordnet ist und als Auflager für das dritte Bauteil wirkt.

7. Verbindbares System nach einem der Ansprüche 3 bis 6,
dass das erste Bauteil (1) und/oder das zweite Bauteil mindestens einen vierten Vorsprung (1.4) aufweisen/aufweist, wobei das freie Ende des vierten Vorsprungs (1.4) als ein Anschlag (1.4) ausgebildet ist und bei dem Verbinden des verbindbaren Systems den Fügeweg entlang der Fügeachse (4) begrenzt.

## Claims

1. Method for connecting three components (1, 2, 3), having the following features:
- positioning of the components (1, 2, 3) in such a way that connection surfaces (1.1, 2.1.1) of the first and the second component (1, 2) corresponding to each other and form-fitting elements (1.2, 3.1; 1.2, 3.2) of the first or the second component (1) and the third component (3) designed to correspond to each other are opposite each other;
- movement of the components (1, 2, 3) relative to each other along a shared joint axis (4) in such a way that the connection surfaces (1.1, 2.1.1) and the form-fitting elements (1.2, 3.1; 1.2, 3.2) are each moved towards each other;
- Material-bonding connection of the first component with the second (1, 2) by means of the connection surfaces (1.1, 2.1.1) and form-fitting connection of the first or the second component (1) with the third component (3) by means of the form-fitting elements (1.2, 3.1; 1.2, 3.2) during the movement of the components (1, 2, 3) relative to each other along the shared joint axis (4), where the third component (3) is fixed after material-bonding and form-fitting connection as in parallel and crosswise to the joint axis (4) by means of the first and the second component (1, 2);
- where the form-fitting elements (1.2, 3.1; 1.2, 3.2) corresponding to each other are designed as at least one crush rib element (1.2) and a holder (3.1; 3.2) corresponding to the crush rib element (1.2) and the form-fitting connection is effected by shearing off the crush rib element (1.2).

2. Method in accordance with claim 1,
**characterized in that**
the material-bonding connection takes the form of welding, specifically laser welding.

3. Connectible system for implementing the method in accordance with one of claims 1 or 2 comprising three components (1, 2, 3) to be connected to each other, where a first and a second component (1, 2) each feature connection surfaces (1.1, 2.1.1) corresponding to each other for material-bonding connection as well as the first or second component (1) and a third component (3) feature form-fitting elements (1.2, 3.1; 1.2, 3.2) corresponding to each other for form-fitting connection, where the connection surfaces (1.1, 2.1.1) are designed and aligned to each other in such a way that the first and the second component (1, 2) can be moved relative to each other along a shared joint axis (4) during the material-bonding connection of the same, and where the form-fitting elements (1.2, 3.1; 1.2, 3.2) are designed and aligned to each other in such a way that the first or the second component (1) and the third component (3) can be moved relative to each other along the shared joint axis (4) during the form-fitting connection of the same and the third component (3) is fixed after material-bonding and form-fitting connection as in parallel and crosswise to the joint axis (4) by means of the first and second component (1, 2),
**characterized in that**
the form-fitting elements (1.2, 3.1; 1.2, 3.2) corresponding to each other are designed as at least one crush rib element (1.2) and a holder (3.1; 3.2) corresponding to the crush rib element (1.2).

4. Connectible system in accordance with claim 3,
**characterized in that**
the first component and/or the second component (2) features/feature at least one protrusion (2.1), where the free end of the first protrusion (2.1) is designed as one of the connection surfaces (2.1.1).

5. Connectible system in accordance with claim 3 or 4,
**characterized in that**
the first component (1) or the second component features at least one second protrusion (1.2), where the free end of the second protrusion (1.2) of the first or second component (1) is designed as a form-fitting element (1.2).

6. Connectible system in accordance with claim 3 or 4,
**characterized in that**
the first component (1) features at least one second protrusion (1.2), where the free end of the second protrusion ( 1.2) of the first component (1) is designed as a form-fitting element (1.2) and a third protrusion (2.3) of the second component (2) is arranged in the form-fitting connection of the first component with the third component (1, 3) in the area of the third component (3) facing away from the second protrusion (1.2) and acts as a support (2.3) for the third component (3), or **in that** the second component features at least one second protrusion, where the free end of the second protrusion of the second component is designed as a form-fitting element and a third protrusion of the first component is arranged in the form-fitting connection of the second component with the third component in the area of the third component facing away from the second protrusion and acts as a support for the third component.

7. Connectible system in accordance with one of claims 3 through 6,
**characterized in that** the first component (1) and/or the second component features/feature at least one fourth protrusion (1.4), where the free end of the fourth protrusion (1.4) is designed as a stop (1.4) and limits the joint path along the joint axis (4) in the connection of the connectible system.

## Revendications

1. Procédé d'assemblage de trois éléments de construction (1, 2, 3) présentant les caractéristiques suivantes:
- Positionnement des éléments de construction (1, 2, 3) de telle sorte que les surfaces d'assemblage (1.1, 2.1.1) correspondantes du premier et du deuxième élément de construction (1, 2), ainsi que les éléments à ajustement de forme (1.2, 3.1; 1.2, 3.2) constitués et correspondants du premier ou du deuxième élément de construction (1) et du troisième élément de construction (3), se trouvent en face l'un de l'autre;
- Déplacement relatif des éléments de construction (1, 2, 3) l'un par rapport à l'autre le long d'un axe d'assemblage commun (4), de telle sorte que les surfaces d'assemblage (1.1, 2.1.1) et les éléments à ajustement de forme (1.2, 3.1; 1.2, 3.2) soient respectivement rapprochés l'un de l'autre;
- Assemblage par liaison de matière du premier et du deuxième élément de construction (1, 2) au moyen des surfaces d'assemblage (1.1, 2.1.1), ainsi qu'assemblage par ajustement de forme du premier ou du deuxième élément de construction (1) et du troisième élément de construction (3) au moyen des éléments à ajustement de forme (1.2, 3.1 ; 1.2, 3.2) pendant de déplacement relatif des éléments de construction (1, 2, 3) l'un vers l'autre le long de l'axe d'assemblage commun (4), le troisième élément de construction (3) étant fixé parallèlement et transversalement à l'axe d'assemblage (4) après l'assemblage par liaison de matière et par ajustement de forme au moyen du premier et du deuxième élément de construction (1, 2) ;
- Les éléments à ajustement de forme (1.2, 3.1; 1.2, 3.2) qui se correspondent étant réalisés sous la forme d'au moins un élément anticollision nervuré (1.2) et d'un logement (3.1; 3.2) correspondant à l'élément anticollision nervuré (1.2), et l'assemblage par ajustement de forme étant réalisé par un cisaillement de l'élément anticollision nervuré (1.2).

2. Procédé selon la revendication 1,
**caractérisé en ce que**
l'assemblage par liaison de matière est réalisé par soudage, en particulier de soudage au laser.

3. Système connectable pour l'exécution du procédé selon l'une des revendications 1 ou 2, comprenant trois éléments de construction (1, 2, 3) à assembler entre eux, un premier et un deuxième élément de construction (1, 2) présentant chacun des surfaces d'assemblage (1.1, 2.1.1) se correspondant pour la liaison par matière, ainsi que le premier ou le deuxième élément de construction (1) et un troisième élément de construction (3) présentant des éléments à ajustement de forme (1.2, 3.1 ; 1.2, 3.2) se correspondant pour la liaison par ajustement de forme, les surfaces d'assemblage (1.1, 2.1.1) étant conçues et orientées l'une par rapport à l'autre de sorte que le premier et le deuxième élément de construction (1, 2) puissent être déplacés l'un par rapport à l'autre le long d'un axe d'assemblage commun (4) pendant leur assemblage par liaison de matière, et dans lequel les éléments de liaison par ajustement de forme (1.2, 3.1 ; 1.2, 3.2) sont réalisés et orientés l'un par rapport à l'autre de sorte que le premier ou le deuxième élément de construction (1) et le troisième élément de construction (3) puissent se déplacer l'un par rapport à l'autre le long de l'axe d'assemblage commun (4) pendant leur assemblage par ajustement de forme et que le troisième élément de construction (3) soit fixé parallèlement et transversalement à l'axe d'assemblage (4) après l'assemblage par liaison de matière et l'assemblage par ajustement de forme au moyen du premier et du deuxième élément de construction (1, 2),
**caractérisé en ce que**
les éléments à ajustement de forme (1.2, 3.1; 1.2, 3.2) qui se correspondent sont réalisés sous la forme d'au moins un élément anticollision nervuré (1.2) et d'un logement (3.1; 3.2) correspondant à l'élément anticollision nervuré (1.2).

4. Système connectable selon la revendication 3,
**caractérisé en ce que**
le premier élément de construction et/ou le deuxième élément de construction (2) présente(nt) au moins une première saillie (2.1), l'extrémité libre de la première saillie (2.1) étant conçue comme l'une des surfaces d'assemblage (2.1.1).

5. Système connectable selon la revendication 3 ou 4,
**caractérisé en ce que**
le premier élément de construction (1) ou le deuxième élément de construction présente au moins une deuxième saillie (1.2), l'extrémité libre de la deuxième saillie (1.2) du premier ou du deuxième élément de construction (1) étant conçue comme un élément à ajustement de forme (1.2).

6. Système connectable selon la revendication 3 ou 4,
**caractérisé en ce que**
le premier élément de construction (1) présente au moins une deuxième saillie (1.2), l'extrémité libre de la deuxième saillie (1.2) du premier élément de construction (1) étant conçue comme un élément à ajustement de forme (1.2) et une troisième saillie (2.3) du deuxième élément de construction (2) étant disposée, lors de l'assemblage par ajustement de forme du premier élément de construction avec le troisième élément de construction (1, 3), dans la zone du troisième élément de construction (3) opposée à la deuxième saillie (1.2) et servant d'appui (2.3) pour le troisième élément de construction (3), ou **en ce que** le deuxième élément de construction présente au moins une deuxième saillie, l'extrémité libre de la deuxième saillie du deuxième élément de construction étant conçue comme un élément à ajustement de forme et une troisième saillie du premier élément de construction étant disposée, lors de l'assemblage par ajustement de forme du deuxième élément de construction avec le troisième élément de construction, dans la zone du troisième élément de construction opposée à la deuxième saillie et servant d'appui pour le troisième élément de construction.

7. Système connectable selon l'une des revendications 3 à 6,
**caractérisé en ce que** le premier élément de construction (1) et/ou le deuxième élément de construction présente(nt) au moins une quatrième saillie (1.4), l'extrémité libre de la quatrième saillie (1.4) étant conçue comme une butée (1.4) et limitant la course d'assemblage le long de l'axe d'assemblage (4) lors de l'assemblage du système connectable.
